# EUROPEAN PATENT SPECIFICATION

(11) **EP 4 510 262 B1**
(45) Date of publication and mention of the grant of the patent: **14.10.2026**
(21) Application number: 23816415.6
(22) Date of filing: 02.06.2023
(51) Int. Cl.: H01M 10/04, H01M 50/20, H01M 10/0587, H01M 50/256

(54) **ELECTRODE ASSEMBLY TRANSFER TRAY**
ÜBERTRAGUNGSSCHALE FÜR ELEKTRODENANORDNUNG
PLATEAU DE TRANSFERT D'ENSEMBLE ÉLECTRODE

(30) Priority: 03.06.2022 KR 20220068447
(43) Date of publication of application: 19.02.2025
(73) Proprietor: LG Energy Solution, Ltd., Seoul 07335 (KR)
(72) Inventor: LEE, Jun-Oh, Daejeon 34122 (KR); KIM, Geon-Woo, Daejeon 34122 (KR); LEE, Gil-Young, Daejeon 34122 (KR)
(74) Representative: Goddar, Heinz J.
(86) International application number: PCT/KR2023/007658
(87) International publication number: WO 2023/234756

(56) References cited:
- CN-U- 201 985 218
- CN-U- 210 110 901
- KR-A- 20150 062 335
- KR-A- 20160 013 344
- KR-A- 20170 101 681
- KR-A- 20170 101 681
- KR-B1- 102 404 261

## Description

### TECHNICAL FIELD

The present disclosure relates to an electrode assembly transfer tray for a cylindrical battery.

The present application claims priority to Korean Patent Application No. 10-2022-0068447 filed on June 3, 2022.

### BACKGROUND ART

Secondary batteries have high applicability according to product groups and electrical characteristics such as high energy density, and thus are commonly applied not only to portable devices but also to electric vehicles (EVs) or hybrid electric vehicles (HEVs) driven by electric power sources. Such secondary batteries are attracting attention as a new energy source to improve eco-friendliness and energy efficiency in that they have not only a primary advantage of dramatically reducing the use of fossil fuels, but also no by-products generated from the use of energy.

Secondary batteries widely used at present include lithium-ion batteries, lithium polymer batteries, nickel cadmium batteries, nickel hydrogen batteries, nickel zinc batteries and the like. An operating voltage of the unit secondary battery cell, namely a unit battery cell, is about 2.5V to 4.5V. Therefore, if a higher output voltage is required, a plurality of battery cells may be connected in series to configure a battery pack. In addition, depending on the charge/discharge capacity required for the battery pack, a plurality of battery cells may be connected in parallel to configure a battery pack. Thus, the number of battery cells included in the battery pack may be set variously according to the required output voltage or the demanded charge/discharge capacity.

Meanwhile, in the case of a cylindrical battery, a separator, which is an insulator, is interposed between the positive electrode and the negative electrode and then wound to form the electrode assembly in the shape of a jelly roll, which is inserted together with an electrolyte into the battery can to configure a battery. In addition, a strip-shaped electrode tab may be connected to each uncoated portion of the positive electrode and the negative electrode, and the electrode tab electrically connects the electrode assembly and the electrode terminal exposed to the outside. For reference, the positive electrode terminal is a cap plate of a sealing body sealing the opening of the battery can, and the negative electrode terminal is the battery can.

In the production process of such a cylindrical battery, it is necessary to transfer the electrode assembly. In the small cylindrical battery having a conventional 18650 or 21700 form factor, there were not many cases of damage during the transfer of the electrode assembly due to its small size and weight.

However, when increasing the form factor to apply the cylindrical battery to an electric vehicle, a new type of transfer tray capable of preventing the electrode assembly from being damaged during transfer is required as the size and weight of the electrode assembly increase.

KR 20170101681 A discloses an apparatus for transferring a battery cell having a beading part formed on the outer surface of a battery can, the apparatus comprising: a tray including a first accommodating part for accommodating an accommodating part located at a lower part of the beading part, a second accommodating part for accommodating a tab located at an upper part of the beading part, and a protrusion formed between the first accommodating part and the second accommodating part and protruding upward and horizontally so as to be inserted into the beading part; and a fixing bar having grooves for inserting at least a part of the accommodating part of the battery cell. The disclosure provides the transfer apparatus of the battery cell which is applicable to automation equipment and has secured stability.

KR 102404261 B1 discloses a battery transport ray formed by vacuum forming, comprising: a bottom portion having a plurality of grooves each accommodating a plurality of batteries; a protrusion positioned between the grooves; a side wall portion extending upward from a rim of the bottom portion to form a space for accommodating a plurality of batteries together with the bottom portion; and a plurality of inner ribs connected to the protrusion and protruding from the side wall portion toward the space, wherein the batteries are each inserted into the grooves, and the bottom surface of the groove includes a first portion that is in direct contact with the batteries and a second portion that is a concave portion that does not contact the batteries, and wherein the height of the inner ribs is lower than the total height obtained by combining the height of the side wall portion and the height of the second portion.

### DISCLOSURE

### Technical Problem

The present disclosure is designed to solve the problems of the related art, and therefore the present disclosure is directed to providing an electrode assembly transfer tray configured to minimize damage to the electrode assembly when transferring the electrode assembly wound in the electrode assembly winding device to the assembly facility.

However, technical problems to be solved by the present disclosure are not limited to the above-described problems, and other problems not mentioned herein may be clearly understood by those skilled in the art from the following description of the present disclosure.

### Technical Solution

The invention is set out in the appended claims. An electrode assembly transfer tray according to an embodiment of the present disclosure may be configured to accommodate an electrode assembly which includes a first electrode including a first uncoated portion, a second electrode including a second uncoated portion, and a separator interposed therebetween, and in which a laminate including the first electrode, the second electrode, and the separator is wound around a winding axis, and may include a bottom plate configured to support the electrode assembly, wherein the bottom plate may include a seating portion, wherein the seating portion may include a first accommodating portion positioned at one end in the extension direction of the winding axis and configured to accommodate a first tab portion formed by winding the first uncoated portion; a second accommodating portion positioned at the other end in the extension direction of the winding axis and configured to accommodate a second tab portion formed by winding the second uncoated portion; and a support portion configured to support a body portion positioned between the first tab portion and the second tab portion.

The bottom plate may include a plurality of seating portions provided along at least one of a first direction parallel to the winding axis and a second direction perpendicular to the first direction.

The seating portion may have a groove shape configured to accommodate the electrode assembly.

The seating portion may have a length longer than the length of the electrode assembly along the winding axis.

The seating portion may be configured such that the first tab portion accommodated in the first accommodating portion and the second tab portion accommodated in the second accommodating portion are not in contact with the bottom plate.

The support portion may be configured such that a bottom surface formed therein is not in contact with the body portion of the electrode assembly.

The support portion may support the electrode assembly at a position lower than the winding axis of the electrode assembly.

The support portion may include a first support portion configured to support a first side of the body portion; and a second support portion configured to support a second side of the body portion.

The first support portion and the second support portion may be configured to be in contact with the outer circumferential surface of the body portion.

The first support portion and the second support portion may be configured such that at least a portion thereof has the same radius of curvature as the radius of curvature of the outer circumferential surface of the body portion.

The first support portion and the second support portion may be inclined to have a predetermined angle with respect to the bottom surface, and may be inclined in opposite directions to each other.

The bottom plate may include a plurality of seating portions provided along at least one of a first direction parallel to the winding axis and a second direction perpendicular to the first direction, wherein the plurality of seating portions may be arranged such that a pair of seating portions adjacent to each other along the second direction are spaced apart by a predetermined distance.

The first support portion and the second support portion may be formed discontinuously along the first direction.

The first support portion and the second support portion may have a discontinuous shape at a position corresponding to the core of the body portion along the first direction so as to grip an outer circumferential surface of the electrode assembly for lifting of the electrode assembly.

The electrode assembly transfer tray may include a guide portion configured to prevent separation of the electrode assembly during transfer along the edge of the bottom plate.

### Advantageous Effects

According to one aspect of the present disclosure, when transporting an electrode assembly with increased size and weight, the electrode assembly may be transferred in a horizontally seated state, thereby reducing the possibility of damage to the electrode assembly during the transfer. In addition, the first tab portion and the second tab portion, which are relatively more likely to be damaged when interfering with the transfer tray during the transfer process, are not supported by the support portion, and thus the possibility of damage to the first tab portion and the second tab portion during the transfer of the electrode assembly may also be reduced.

According to another aspect of the present disclosure, the seating portion is formed longer than the length of the electrode assembly, so that the outer circumferential surfaces and/or ends of the first tab portion and the second tab portion are not in contact with the bottom plate, thereby reducing the possibility of damage to the first tab portion and the second tab portion more effectively. In addition, in this case, in order to maximize the above effect, the transfer path of the electrode assembly using the electrode assembly transfer tray may be set to move only in a first direction parallel to and a second direction perpendicular to the winding axis of the electrode assembly.

According to still another aspect of the present disclosure, the lowest portion of the electrode assembly is not in contact with the bottom surface, and thus damage caused by a load of the electrode assembly may be prevented.

According to still another aspect of the present disclosure, the support portion may stably support the body portion of the electrode assembly from both sides.

According to still another aspect of the present disclosure, even if the electrode assembly is separated from the seating portion, it is possible to prevent the electrode assembly from being separated from the entire electrode assembly transfer tray by the guide portion. In addition, the transfer process of the electrode assembly tray may be facilitated by the handle portion.

### DESCRIPTION OF DRAWINGS

FIG. 1 is a view showing a first electrode and a second electrode of an electrode assembly transferred by an electrode assembly transfer tray according to an embodiment of the present disclosure.
FIG. 2 is a view showing a state before an electrode assembly transferred by an electrode assembly transfer tray according to an embodiment of the present disclosure is wound, and shows a laminate including a first electrode, a second electrode, and a separator.
FIG. 3 is a cross-sectional view showing an electrode assembly moved by an electrode assembly transfer tray according to an embodiment of the present disclosure.
FIG. 4 is a perspective view showing an electrode assembly moved by an electrode assembly transfer tray according to an embodiment of the present disclosure.
FIG. 5 is a perspective view showing an electrode assembly transfer tray according to an embodiment of the present disclosure.
FIG. 6 is a plan view showing an electrode assembly transfer tray according to an embodiment of the present disclosure.
FIG. 7 is a view showing a cross section taken along line A-A' of FIG. 6.
FIG. 8 is an enlarged view of a partial area of FIG. 6.
FIG. 9 is a view showing a state in which an electrode assembly is accommodated in a seating portion of an electrode assembly transfer tray according to an embodiment of the present disclosure.
FIG. 10 is a view showing a state in which an electrode assembly is accommodated in the transfer tray according to an embodiment of the present disclosure shown in FIG. 7.
FIG. 11 is a view showing a state in which an electrode assembly is accommodated in an electrode assembly transfer tray according to another embodiment of the present disclosure.
FIG. 12 is a view showing a portion of a cross section taken along line B-B' of FIG. 6.
FIG. 13 is a view showing a state in which an electrode assembly is being accommodated in an electrode assembly transfer tray shown in FIG. 12.

### BEST MODE

Hereinafter, preferred embodiments of the present disclosure will be described in detail with reference to the accompanying drawings. The accompanying drawings herein illustrate preferred embodiments of the present disclosure and serve to further understand the technical aspects of the present disclosure together with the following detailed description, so the present disclosure should not be construed as limited to those described in the drawings. The same reference numerals refer to the same components. Also, in the drawings, the thickness, ratio, and dimensions of the components may be exaggerated for effective description of the technical content.

It should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

The terms indicating directions as used herein such as upper, lower, left, right, front, and rear are used for convenience of description only, and it is obvious to those skilled in the art that the term may change depending on the position of the stated element or an observer.

Therefore, since the embodiments described herein and the configurations shown in the drawings are only the most preferred embodiments of the present disclosure and do not represent all of the technical aspects of the present disclosure, it should be understood that there may be various equivalents and modifications to be substituted for them at the time of this application.

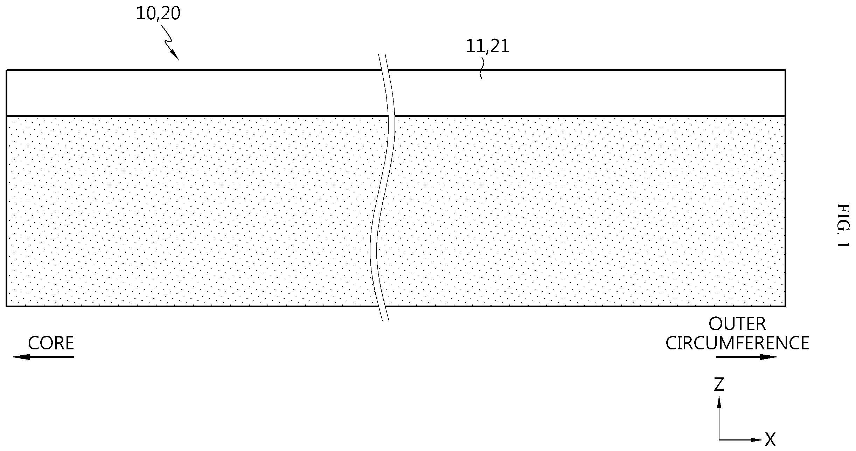

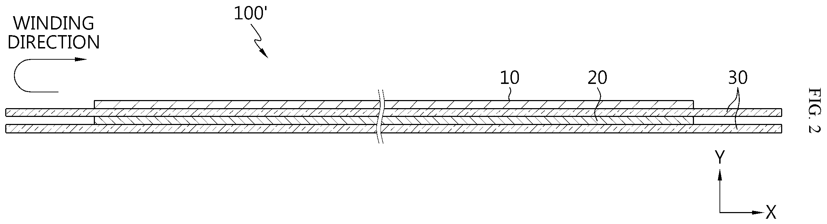

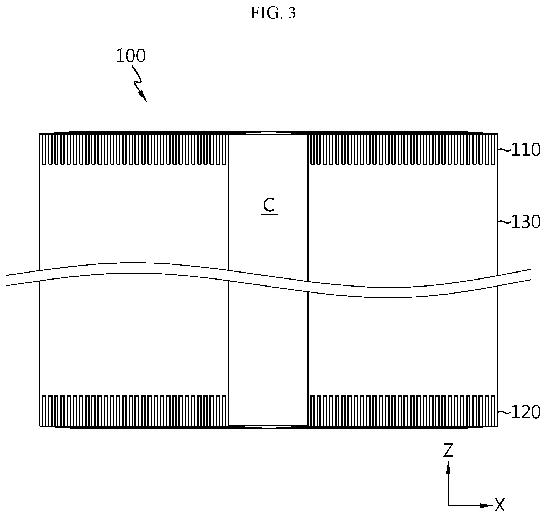

FIG. 1 is a view showing a first electrode and a second electrode of an electrode assembly transferred by an electrode assembly transfer tray according to an embodiment of the present disclosure. FIG. 2 is a view showing a state before an electrode assembly transferred by an electrode assembly transfer tray according to an embodiment of the present disclosure is wound, and shows a laminate including a first electrode, a second electrode, and a separator. FIG. 3 is a cross-sectional view showing an electrode assembly moved by an electrode assembly transfer tray according to an embodiment of the present disclosure.

Referring to FIGS. 1 to 3, an electrode assembly 100 transported by an electrode assembly transfer tray 1 according to the present disclosure may include a first electrode 10, a second electrode 20, and a separator 30.

The first electrode 10 may include a first uncoated portion 11. The first electrode 10 may have a first electrode active material applied to at least a portion of one or both surfaces thereof, and may include the first uncoated portion 11 in which the first electrode active material is not applied to one end thereof. The first uncoated portion 11 may be provided at one end of the first electrode 10 along the winding direction (X-axis extension direction). The first electrode 10 may be a negative electrode or a positive electrode.

The second electrode 20 may include a second uncoated portion 21. The second electrode 20 may have a second electrode active material applied to at least a portion of one or both surfaces thereof, and may include the second uncoated portion 21 in which the second electrode active material is not applied to one end thereof. The second uncoated portion 21 may be provided at one end of the second electrode 20 along the winding direction (X-axis extension direction). The second electrode 20 may be a positive electrode or a negative electrode, with a polarity opposite to that of the first electrode 10.

The separator 30 may be interposed between the first electrode 10 and the second electrode 20. The separator 30 may use a porous polymer film including at least one polymer selected from polyolefin-based polymers such as ethylene homopolymer, propylene homopolymer, ethylene/butene copolymer, ethylene/hexene copolymer, ethylene/methacrylate copolymer, and the like, alone or by laminating a plurality of polymer films. As another example, the separator 30 may use a conventional porous nonwoven fabric, for example, a nonwoven fabric made of high melting point glass fiber, polyethylene terephthalate fiber, or the like.

The electrode assembly 100 may be manufactured by winding a laminate 100' including the first electrode 10, the second electrode 20, and the separator 30 around a winding axis (a direction parallel to the Z-axis). The laminate 100' may be formed by stacking the first electrode 10 and the second electrode 20 at least once with the separator 30 interposed therebetween. The electrode assembly 100 may have a central hole C formed by winding the laminate 100' around a winding axis (a direction parallel to the Z-axis).

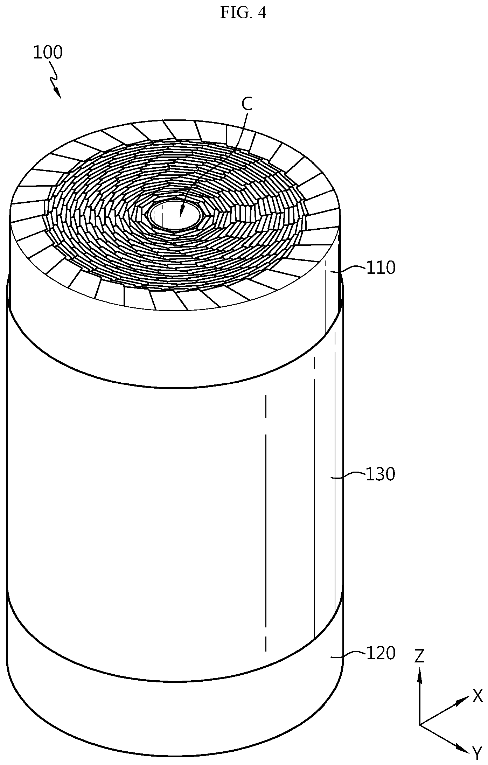

FIG. 4 is a perspective view showing an electrode assembly moved by an electrode assembly transfer tray according to an embodiment of the present disclosure.

Referring to FIG. 4, the electrode assembly 100 may form a first tab portion 110, a second tab portion 120, and a body portion 130 by winding the laminate 100'.

The first tab portion 110 may be formed by winding the first uncoated portion 11. The first tab portion 110 may be located at one end (an end located in the positive direction of the Z-axis) in the extension direction of the winding axis (a direction parallel to the Z-axis). This is to use at least a portion of the first uncoated portion 11 exposed to the outside of the separator 30 as an electrode tab by itself. At least a portion of the first uncoated portion 11 may include a plurality of segments divided along the winding direction (X-axis extension direction) of the electrode assembly 100. The plurality of segments may be bent along the radial direction of the electrode assembly 100. The plurality of bent segments may be overlapped in several layers. Therefore, the first tab portion 110 may form a surface by overlapping several layers of a plurality of segments. However, the first tab portion 110 may be not only in the case where the plurality of segments are completely bent along the radial direction of the electrode assembly 100, but also in the form of being bent only at a certain angle.

The second tab portion 120 may be formed by winding the second uncoated portion 21. The second tab portion 120 may be located at the other end (an end located in the negative direction of the Z-axis) in the extension direction of the winding axis (a direction parallel to the Z-axis). This is to use at least a portion of the second uncoated portion 21 exposed to the outside of the separator 30 as an electrode tab by itself. At least a portion of the second uncoated portion 21 may include a plurality of segments divided along the winding direction of the electrode assembly 100. The plurality of segments may be bent along the radial direction of the electrode assembly 100. The plurality of bent segments may be overlapped in several layers. Therefore, the second tab portion 120 may form a surface by overlapping several layers of a plurality of segments. However, the second tab portion 120 may be not only in the case where the plurality of segments are completely bent along the radial direction of the electrode assembly 100, but also in the form of being bent only at a certain angle.

The body portion 130 may be positioned between the first tab portion 110 and the second tab portion 120. The body portion 130 may be formed by winding a portion corresponding to the portion to which the first electrode 10 active material of the first electrode 10 is applied and/or the portion to which the second electrode 20 active material of the second electrode 20 is applied.

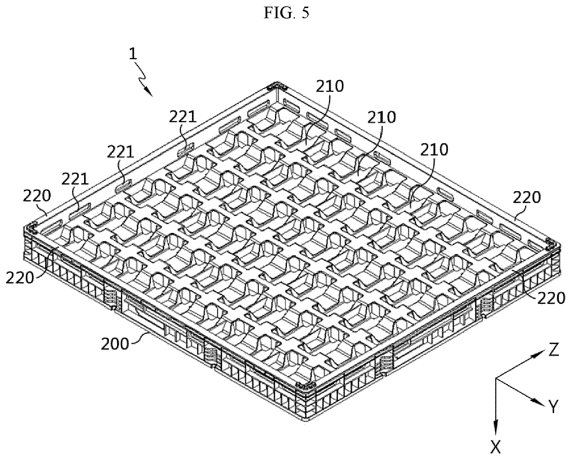

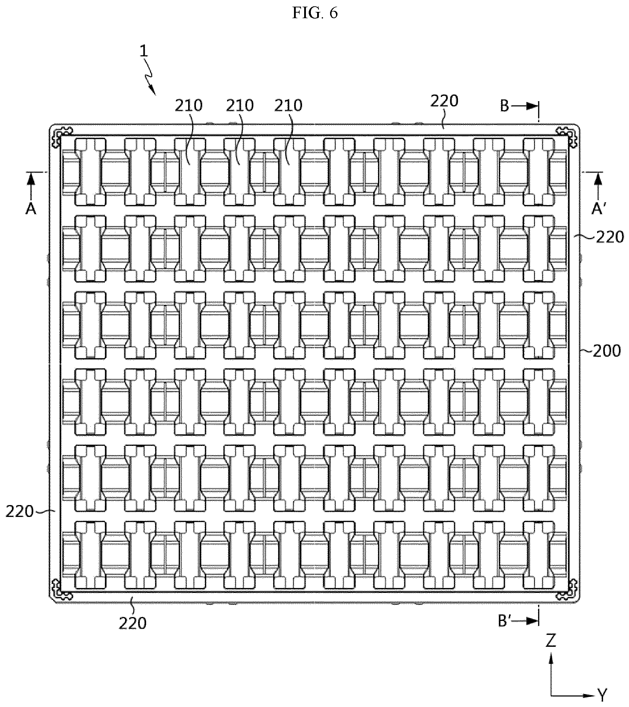

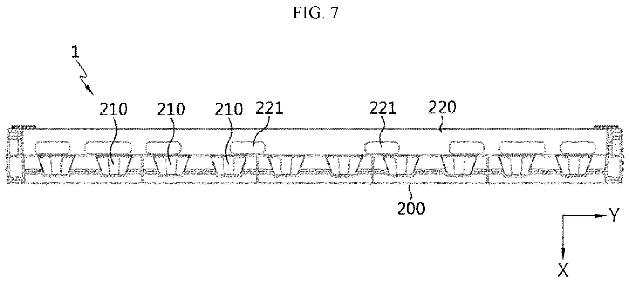

FIG. 5 is a perspective view showing an electrode assembly transfer tray according to an embodiment of the present disclosure. FIG. 6 is a plan view showing an electrode assembly transfer tray according to an embodiment of the present disclosure. FIG. 7 is a view showing a cross section taken along line A-A' of FIG. 6.

Referring to FIGS. 5 to 7, the electrode assembly transfer tray 1 may include a bottom plate 200.

The bottom plate 200 may be configured to support the electrode assembly 100. The bottom plate 200 may include a seating portion 210. The seating portion 210 may be configured to accommodate the electrode assembly 100. The seating portion 210 may have a groove shape configured to accommodate the electrode assembly 100. The seating portion 210 may be configured such that the electrode assembly 100 is seated in a horizontal direction. The seating portion 210 may be provided in plurality. The seating portion 210 may be provided in plurality along at least one direction of a first direction (a direction parallel to the Z-axis) parallel to the winding axis (a direction parallel to the Z-axis) of the electrode assembly and a second direction (a direction parallel to the Y-axis) perpendicular to the first direction. For example, the seating portion 210 may be arranged in 10 columns along the first direction (a direction parallel to the Z-axis) and in 6 rows along the second direction (a direction parallel to the Y-axis).

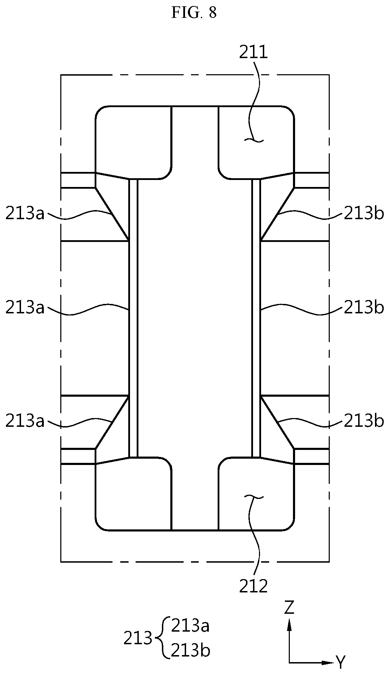

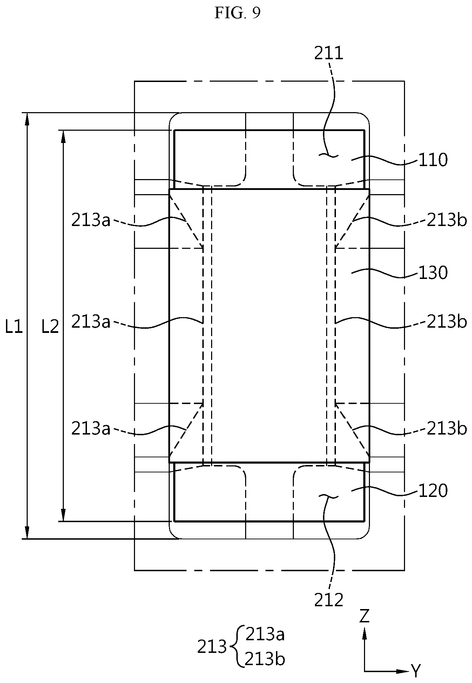

FIG. 8 is an enlarged view of a partial area of FIG. 6. FIG. 9 is a view showing a state in which an electrode assembly is accommodated in a seating portion of an electrode assembly transfer tray according to an embodiment of the present disclosure.

Referring to FIGS. 8 and 9, the seating portion 210 may include a first accommodating portion 211, a second accommodating portion 212, and a support portion 213. The first accommodating portion 211 and the second accommodating portion 212 may be formed on both sides of the support portion 213 in the longitudinal direction (extension direction of the Z-axis), respectively.

The first accommodating portion 211 may be formed at a position corresponding to the first tab portion 110. The first accommodating portion 211 may be configured to accommodate the first tab portion 110. The first accommodating portion 211 may have a groove shape configured to accommodate the first tab portion 110. The first accommodating portion 211 may be configured to accommodate the first tab portion 110 of the electrode assembly 100 in a horizontal state. The first accommodating portion 211 may be configured not to support the first tab portion 110 accommodated in the first accommodating portion 211.

The second accommodating portion 212 may be formed at a position corresponding to the second tab portion 120. The second accommodating portion 212 may be configured to accommodate the second tab portion 120. The second accommodating portion 212 may have a groove shape configured to accommodate the second tab portion 120. The second accommodating portion 212 may be configured to accommodate the second tab portion 120 of the electrode assembly 100 in a horizontal state. The second accommodating portion 212 may be configured not to support the second tab portion 120 accommodated in the second accommodating portion 212.

The support portion 213 may be configured to support the body portion 130. The support portion 213 may be configured to support the body portion 130 of the electrode assembly 100 in a horizontal state.

According to this configuration of the present disclosure, when transporting the electrode assembly 100 with increased size and weight, the electrode assembly 100 may be transferred in a horizontally seated state, thereby reducing the possibility of damage to the electrode assembly 100 during the transfer. In addition, the first tab portion 110 and the second tab portion 120, which are relatively more likely to be damaged when interfering with the transfer tray during the transfer process, are not supported by the support portion 213, and thus the possibility of damage to the first tab portion 110 and the second tab portion 120 during the transfer of the electrode assembly 100 may also be reduced.

The detailed structure of the seating portion 210 will be described with reference to FIGS. 8 to 9 again.

The length L1 of the seating portion 210 may be longer than the length L2 of the electrode assembly 100 along the winding axis (a direction parallel to the Z-axis). The support portion 213 of the seating portion 210 may have approximately the same length as the body portion 130 of the electrode assembly 100, the first accommodating portion 211 of the seating portion 210 may have an approximately longer length than the first tab portion 110 of the electrode assembly 100, and the second accommodating portion 212 of the seat portion 210 may have an approximately longer length than the second tab portion 120 of the electrode assembly 100.

The seating portion 210 may be configured such that the first tab portion 110 accommodated in the first accommodating portion 211 is not in contact with the bottom plate 200. The seating portion 210 may be configured such that the second tab portion 120 accommodated in the second accommodating portion 212 is not in contact with the bottom plate 200.

Referring to FIGS. 3 and 4 together with FIGS. 8 and 9, the seating portion 210 may be configured such that the outer circumferential surface and end of the first tab portion 110 and the second tab portion 120 are not in contact with the bottom plate 200. Meanwhile, when the first tab portion 110 and/or the second tab portion 120 of the electrode assembly 100 has a bent structure along the radial direction of the electrode assembly 100, the seating portion 210 may be configured such that the surface formed by bending the first tab portion 110 and the second tab portion 120 is not in contact with the bottom plate 200.

According to this configuration of the present disclosure, the seating portion 210 may be formed to be longer than the length of the electrode assembly 100, so that the outer circumferential surfaces and/or ends of the first tab portion 110 and the second tab portion 120 are not in contact with the bottom plate 200, thereby reducing the possibility of damage to the first tab portion 110 and the second tab portion 120 more effectively. In addition, in this case, in order to maximize the above effect, the transfer path of the electrode assembly 100 using the electrode assembly transfer tray 1 may be set to move only in a first direction (a direction parallel to the Z-axis) parallel to and a second direction (a direction parallel to the Y-axis) perpendicular to the winding axis (a direction parallel to the Z-axis) of the electrode assembly 100.

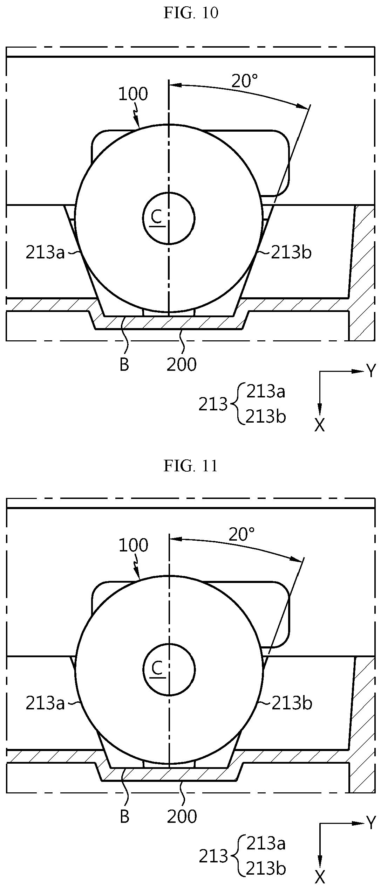

FIG. 10 is a view showing a state in which an electrode assembly is accommodated in the transfer tray according to an embodiment of the present disclosure shown in FIG. 7. FIG. 11 is a view showing a state in which an electrode assembly is accommodated in an electrode assembly transfer tray according to another embodiment of the present disclosure.

The detailed structure of the support portion 213 of the seating portion 210 will be described in detail with reference to FIGS. 10 and 11.

The support portion 213 may be configured such that the bottom surface B formed therein is not contact with the body portion 130 of the electrode assembly 100. The support portion 213 may support the electrode assembly 100 at a position lower than the winding axis (a direction parallel to the Z-axis) of the electrode assembly 100. The support portion 213 may support the body portion 130 of the electrode assembly 100 so that the electrode assembly 100 is in a state of being approximately floating from the bottom surface B.

According to this configuration of the present disclosure, the lowest portion of the electrode assembly 100 is not in contact with the bottom surface B, and thus damage caused by a load of the electrode assembly 100 may be prevented.

Referring to FIGS. 10 and 11 again, the support portion 213 may include a first support portion 213a and a second support portion 213b.

The support portion 213 may support the body portion 130 with the first support portion 213a and the second support portion 213b at both sides along a first direction (a direction parallel to the Z-axis) parallel to and a second direction (a direction parallel to the Y-axis) perpendicular to the winding axis (a direction parallel to the Z-axis) of the electrode assembly 100, respectively.

The first support portion 213a may be configured to support the first side (a negative direction of the Y-axis) of the body portion 130. The first support portion 213a may be configured to be in contact with the outer circumferential surface of the body portion 130. The first support portion 213a may be inclined to have a predetermined angle with respect to the bottom surface B, as shown in FIG. 10. At least a portion of the first support portion 213a may have the same radius of curvature as the radius of curvature of the outer circumferential surface of the body portion 130, as shown in FIG. 11. The first support portion 213a may be inclined in an opposite direction to the second support portion 213b. The first support portion 213a may be inclined by approximately 50° to 80° with respect to the bottom surface B. The first support portion 213a may be inclined by approximately 60° to 80° with respect to the bottom surface B. The first support portion 213a may be inclined by approximately 65° to 75° with respect to the bottom surface B. The first support portion 213a may be inclined by approximately 68° to 72° with respect to the bottom surface B. The first support portion 213a may be inclined by approximately 70° with respect to the bottom surface B.

The second support portion 213b may be configured to support the second side (a positive direction of the Y-axis) of the body portion 130. The second support portion 213b may be configured to be in contact with the outer circumferential surface of the body portion 130. The second support portion 213b may be inclined to have a predetermined angle with respect to the bottom surface B, as shown in FIG. 10. At least a portion of the second support portion 213b may have the same radius of curvature as the radius of curvature of the outer circumferential surface of the body portion 130, as shown in FIG. 11. The second support portion 213b may be inclined in an opposite direction to the first support portion 213a. The second support portion 213b may be inclined by approximately 50° to 80° with respect to the bottom surface B. The second support portion 213b may be inclined by approximately 60° to 80° with respect to the bottom surface B. The second support portion 213b may be inclined by approximately 65° to 75° with respect to the bottom surface B. The second support portion 213b may be inclined by approximately 68° to 72° with respect to the bottom surface B. The second support portion 213b may be inclined by approximately 70° with respect to the bottom surface B.

According to this configuration of the present disclosure, the support portion 213 may stably support the body portion 130 of the electrode assembly 100 from both sides. In particular, when the inclined angles of the first support portion 213a and the second support portion 213b are formed as described above, the movement of the electrode assembly 100 may be minimized by the optimal formation angle.

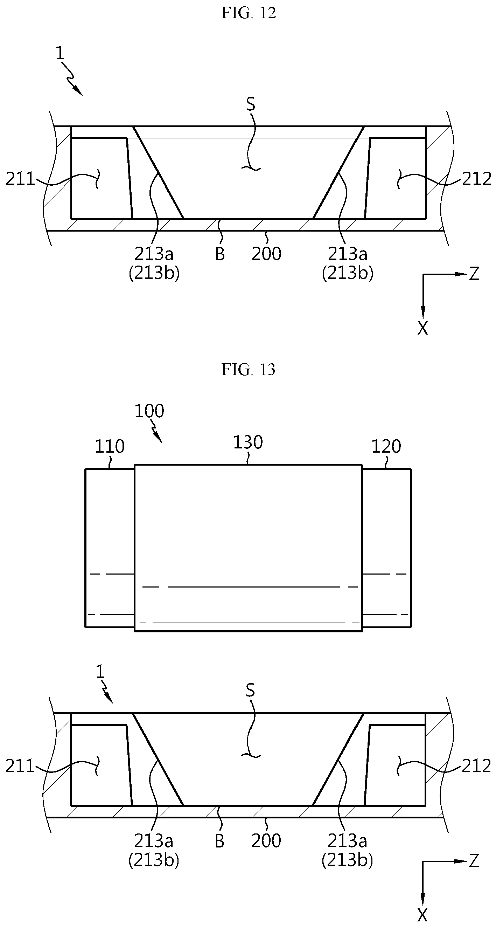

FIG. 12 is a view showing a portion of a cross section taken along line B-B' of FIG. 6. FIG. 13 is a view showing a state in which an electrode assembly is being accommodated in an electrode assembly transfer tray shown in FIG. 12.

The detailed structure of the first support portion 213a and the second support portion 213b and the arrangement relationship between the pair of seating portions 210 adjacent to each other along the second direction will be described in detail with reference to FIGS. 5 and 6 together with FIGS. 12 and 13.

Referring to FIGS. 12 and 13, the first support portion 213a and the second support portion 213b may be formed discontinuously along the first direction (a direction parallel to the X-axis). The first support portion 213a and the second support portion 213b may have a tapered shape that becomes narrower toward the bottom surface B. The first support portion 213a and the second support portion 213b may have a discontinuous area S formed at a position corresponding to the core of the body portion 130 in the first direction (a direction parallel to the Z-axis). The discontinuous area S of the first support portion 213a and the discontinuous area S of the second support portion 213b may be symmetrical along the second direction (a direction parallel to the Y-axis).

The outer circumferential surface of the electrode assembly 100 may be exposed through a substantially trapezoidal opening formed by the discontinuous area S. In the electrode assembly 100, the outer circumferential surface thereof exposed through the trapezoidal opening may be gripped and lifted by an operator or a lifting jig.

Referring to FIGS. 5 and 6 together, the plurality of seating portions 210 may be arranged such that a pair of seating portions 210 adjacent to each other along the second direction (a direction parallel to the Y-axis) are spaced apart by a predetermined distance. The predetermined distance may be set to secure a space into which a lifting jig configured to grip and lift the operator's hand or the outer circumferential surface of the electrode assembly 100 may be inserted.

Referring to FIGS. 5 to 7 again, the electrode assembly transfer tray 1 may include a guide portion 220.

The guide portion 220 may be configured such that the electrode assembly 100 is not separated during transfer along the edge of the bottom plate 200. The guide portion 220 may be in a form protruding in the negative direction of the X-axis along the edge of the bottom plate 200. The guide portion 220 may be four plates coupled along the edge of the bottom plate 200.

The guide portion 220 may include a handle portion 221 configured to be lifted during transfer.

The handle portion 221 has an opening shape formed in the guide portion 220, and a hook connected to an operator's hand or a lifting jig may be caught. The handle portion 221 may be provided in plurality.

According to this configuration of the present disclosure, even if the electrode assembly 100 is separated from the seating portion 210, it is possible to prevent the electrode assembly 100 from being separated from the entire electrode assembly transfer tray 1 by the guide portion 220. In addition, the transfer process of the electrode assembly 100 tray may be facilitated by the handle portion 221.

While the present disclosure has been hereinabove described with regard to a limited number of embodiments and drawings, the present disclosure is not limited thereto and it is obvious to those skilled in the art that a variety of modifications and changes may be made thereto within the technical aspects of the present disclosure.

### [Reference Signs]

1: electrode assembly transfer tray
10: first electrode
11: first uncoated portion
20: second electrode
21: second uncoated portion
30: separator
110: first tab portion
120: second tab portion
130: body portion
100': laminate
100: electrode assembly
C: winding axis
200: bottom plate
B: bottom surface
210: seating portion
211: first accommodating portion
212: second accommodating portion
213: support portion
213a: first support portion
213b: second support portion
S: discontinuous area
220: guide portion
221: handle portion

## Claims

1. An electrode assembly transfer tray configured to accommodate an electrode assembly (100) which comprises a first electrode (10) comprising a first uncoated portion (11), a second electrode (20) comprising a second uncoated portion (21), and a separator (30) interposed therebetween, and in which a laminate (100') comprising the first electrode (10), the second electrode (20), and the separator (30) is wound around a winding axis, comprising
a bottom plate (200) configured to support the electrode assembly (100),
wherein the bottom plate (200) comprises a seating portion (210), and
wherein the seating portion (210) comprises:
a first accommodating portion (211) positioned at one end in the extension direction of the winding axis and configured to accommodate a first tab portion (110) formed by winding the first uncoated portion (11);
a second accommodating portion (212) positioned at the other end in the extension direction of the winding axis and configured to accommodate a second tab portion (120) formed by winding the second uncoated portion (21); and
a support portion (213) configured to support a body portion (130) positioned between the first tab portion (110) and the second tab portion (120);
wherein the support portion (213) comprises:
a first support portion (213a) configured to support a first side of the body portion (130);
a second support portion (213b) configured to support a second side of the body portion (130);
wherein the first support portion (213a) and the second support portion (213b) are configured to be in contact with the outer circumferential surface of the body portion (130);
wherein the first support portion (213a) and the second support portion (213b) are inclined to have a predetermined angle with respect to the bottom surface, and are inclined in opposite directions to each other.

2. The electrode assembly transfer tray according to claim 1,
wherein the bottom plate (200) comprises a plurality of seating portions (210) provided along at least one of a first direction parallel to the winding axis and a second direction perpendicular to the first direction.

3. The electrode assembly transfer tray according to claim 1,
wherein the seating portion (210) has a groove shape configured to accommodate the electrode assembly (100).

4. The electrode assembly transfer tray according to claim 1,
wherein the seating portion (210) has a length longer than the length of the electrode assembly (100) along the winding axis.

5. The electrode assembly transfer tray according to claim 1,
wherein the seating portion (210) is configured such that the first tab portion (110) accommodated in the first accommodating portion (211) and the second tab portion (120) accommodated in the second accommodating portion (212) are not in contact with the bottom plate (200).

6. The electrode assembly transfer tray according to claim 1,
wherein the support portion (213) is configured such that a bottom surface formed therein is not in contact with the body portion (130) of the electrode assembly (100).

7. The electrode assembly transfer tray according to claim 6,
wherein the support portion (213) supports the electrode assembly (100) at a position lower than the winding axis of the electrode assembly (100).

8. The electrode assembly transfer tray according to claim 1,
wherein the first support portion (213a) and the second support portion (213b) are configured such that at least a portion thereof has the same radius of curvature as the radius of curvature of the outer circumferential surface of the body portion (130).

9. The electrode assembly transfer tray according to claim 1,
wherein the bottom plate (200) comprises a plurality of seating portions (210) provided along at least one of a first direction parallel to the winding axis and a second direction perpendicular to the first direction, and
wherein the plurality of seating portions (210) are arranged such that a pair of seating portions (210) adjacent to each other along the second direction are spaced apart by a predetermined distance.

10. The electrode assembly transfer tray according to claim 9,
wherein the first support portion (213a) and the second support portion (213b) are formed discontinuously along the first direction.

11. The electrode assembly transfer tray according to claim 10,
wherein the first support portion (213a) and the second support portion (213b) have a discontinuous shape at a position corresponding to the core of the body portion (130) along the first direction so as to grip an outer circumferential surface of the electrode assembly (100) for lifting of the electrode assembly (100).

12. The electrode assembly transfer tray according to claim 1,
which comprises a guide portion (220) configured to prevent separation of the electrode assembly (100) during transfer along the edge of the bottom plate (200).

## Patentansprüche

1. Elektrodenanordnungstransferschale, die konfiguriert ist, um eine Elektrodenanordnung (100) aufzunehmen, die eine erste Elektrode (10), die einen ersten unbeschichteten Abschnitt (11) umfasst, eine zweite Elektrode (20), die einen zweiten unbeschichteten Abschnitt (21) umfasst, und einen dazwischen angeordneten Separator (30) umfasst, und in der ein Laminat (100'), das die erste Elektrode (10), die zweite Elektrode (20) und den Separator (30) umfasst, um eine Wickelachse gewickelt ist, umfassend
eine Bodenplatte (200), die konfiguriert ist, um die Elektrodenanordnung (100) zu tragen,
wobei die Bodenplatte (200) einen Sitzabschnitt (210) umfasst, und
wobei der Sitzabschnitt (210) umfasst:
einen ersten Aufnahmeabschnitt (211), der an einem Ende in der Erstreckungsrichtung der Wickelachse positioniert ist und konfiguriert ist, um einen ersten Laschenabschnitt (110) aufzunehmen, der durch Wickeln des ersten unbeschichteten Abschnitts (11) gebildet wird;
einen zweiten Aufnahmeabschnitt (212), der an dem anderen Ende in der Erstreckungsrichtung der Wickelachse positioniert ist und konfiguriert ist, um einen zweiten Laschenabschnitt (120) aufzunehmen, der durch Wickeln des zweiten unbeschichteten Abschnitts (21) gebildet wird; und
einen Stützabschnitt (213), der konfiguriert ist, um einen Körperabschnitt (130) zu stützen, der zwischen dem ersten Laschenabschnitt (110) und dem zweiten Laschenabschnitt (120) positioniert ist;
wobei der Stützabschnitt (213) umfasst:
einen ersten Stützabschnitt (213a), der konfiguriert ist, um eine erste Seite des Körperabschnitts (130) zu stützen;
einen zweiten Stützabschnitt (213b), der konfiguriert ist, um eine zweite Seite des Körperabschnitts (130) zu stützen;
wobei der erste Stützabschnitt (213a) und der zweite Stützabschnitt (213b) konfiguriert sind, um mit der Außenumfangsfläche des Körperabschnitts (130) in Kontakt zu sein;
wobei der erste Stützabschnitt (213a) und der zweite Stützabschnitt (213b) geneigt sind, um einen vorbestimmten Winkel in Bezug auf die Bodenfläche aufzuweisen, und in entgegengesetzte Richtungen zueinander geneigt sind.

2. Elektrodenanordnungstransferschale nach Anspruch 1,
wobei die Bodenplatte (200) eine Vielzahl von Sitzabschnitten (210) umfasst, die entlang mindestens einer von einer ersten Richtung parallel zu der Wickelachse und einer zweiten Richtung senkrecht zu der ersten Richtung bereitgestellt sind.

3. Elektrodenanordnungstransferschale nach Anspruch 1,
wobei der Sitzabschnitt (210) eine Nutform aufweist, die konfiguriert ist, um die Elektrodenanordnung (100) aufzunehmen.

4. Elektrodenanordnungstransferschale nach Anspruch 1,
wobei der Sitzabschnitt (210) eine Länge aufweist, die länger als die Länge der Elektrodenanordnung (100) entlang der Wickelachse ist.

5. Elektrodenanordnungstransferschale nach Anspruch 1,
wobei der Sitzabschnitt (210) derart konfiguriert ist, dass der erste Laschenabschnitt (110), der in dem ersten Aufnahmeabschnitt (211) aufgenommen ist, und der zweite Laschenabschnitt (120), der in dem zweiten Aufnahmeabschnitt (212) aufgenommen ist, nicht mit der Bodenplatte (200) in Kontakt sind.

6. Elektrodenanordnungstransferschale nach Anspruch 1,
wobei der Stützabschnitt (213) derart konfiguriert ist, dass eine darin ausgebildete Bodenfläche nicht mit dem Körperabschnitt (130) der Elektrodenanordnung (100) in Kontakt ist.

7. Elektrodenanordnungstransferschale nach Anspruch 6,
wobei der Stützabschnitt (213) die Elektrodenanordnung (100) an einer Position stützt, die niedriger als die Wickelachse der Elektrodenanordnung (100) ist.

8. Elektrodenanordnungstransferschale nach Anspruch 1,
wobei der erste Stützabschnitt (213a) und der zweite Stützabschnitt (213b) derart konfiguriert sind, dass mindestens ein Abschnitt davon den gleichen Krümmungsradius wie der Krümmungsradius der Außenumfangsfläche des Körperabschnitts (130) aufweist.

9. Elektrodenanordnungstransferschale nach Anspruch 1,
wobei die Bodenplatte (200) eine Vielzahl von Sitzabschnitten (210) umfasst, die entlang mindestens einer von einer ersten Richtung parallel zu der Wickelachse und einer zweiten Richtung senkrecht zu der ersten Richtung bereitgestellt sind, und
wobei die Vielzahl von Sitzabschnitten (210) derart angeordnet sind, dass ein Paar von Sitzabschnitten (210), die entlang der zweiten Richtung aneinander angrenzen, um einen vorbestimmten Abstand voneinander beabstandet sind.

10. Elektrodenanordnungstransferschale nach Anspruch 9,
wobei der erste Stützabschnitt (213a) und der zweite Stützabschnitt (213b) diskontinuierlich entlang der ersten Richtung gebildet sind.

11. Elektrodenanordnungstransferschale nach Anspruch 10,
wobei der erste Stützabschnitt (213a) und der zweite Stützabschnitt (213b) eine diskontinuierliche Form an einer Position aufweisen, die dem Kern des Körperabschnitts (130) entlang der ersten Richtung entspricht, um eine Außenumfangsfläche der Elektrodenanordnung (100) zum Anheben der Elektrodenanordnung (100) zu greifen.

12. Elektrodenanordnungstransferschale nach Anspruch 1,
die einen Führungsabschnitt (220) umfasst, der konfiguriert ist, um eine Trennung der Elektrodenanordnung (100) während des Transfers entlang der Kante der Bodenplatte (200) zu verhindern.

## Revendications

1. Plateau de transfert d'ensemble électrode configuré pour recevoir un ensemble électrode (100) qui comprend une première électrode (10) comprenant une première portion non enrobée (11), une deuxième électrode (20) comprenant une deuxième portion non enrobée (21), et un séparateur (30) interposé entre elles, et dans lequel un stratifié (100') comprenant la première électrode (10), la deuxième électrode (20), et le séparateur (30) est enroulé autour d'un axe d'enroulement, comprenant
une plaque inférieure (200) configurée pour soutenir l'ensemble électrode (100),
dans lequel la plaque inférieure (200) comprend une portion d'assise (210), et
dans lequel la portion d'assise (210) comprend :
une première portion de réception (211) positionnée au niveau d'une extrémité dans la direction d'allongement de l'axe d'enroulement et configurée pour recevoir une première portion de languette (110) formée grâce à l'enroulement de la première portion non enrobée (11) ;
une deuxième portion de réception (212) positionnée au niveau de l'autre extrémité dans la direction d'allongement de l'axe d'enroulement et configurée pour recevoir une deuxième portion de languette (120) formée grâce à l'enroulement de la deuxième portion non enrobée (21) ; et
une portion de support (213) configurée pour soutenir une portion de corps (130) positionnée entre la première portion de languette (110) et la deuxième portion de languette (120) ;
dans lequel la portion de support (213) comprend :
une première portion de support (213a) configurée pour soutenir un premier côté de la portion de corps (130) ;
une deuxième portion de support (213b) configurée pour soutenir un deuxième côté de la portion de corps (130) ;
dans lequel la première portion de support (213a) et la deuxième portion de support (213b) sont configurées pour être en contact avec la surface circonférentielle externe de la portion de corps (130) ;
dans lequel la première portion de support (213a) et la deuxième portion de support (213b) sont inclinées afin d'avoir un angle prédéterminé par rapport à la surface inférieure, et sont inclinées dans des directions opposées l'une à l'autre.

2. Plateau de transfert d'ensemble électrode selon la revendication 1,
dans lequel la plaque inférieure (200) comprend une pluralité de portions d'assise (210) prévues le long d'au moins une direction parmi une première direction parallèle à l'axe d'enroulement et une deuxième direction perpendiculaire à la première direction.

3. Plateau de transfert d'ensemble électrode selon la revendication 1,
dans lequel la portion d'assise (210) a une forme en rainure configurée pour recevoir l'ensemble électrode (100).

4. Plateau de transfert d'ensemble électrode selon la revendication 1,
dans lequel la portion d'assise (210) a une longueur qui est plus longue que la longueur de l'ensemble électrode (100) le long de l'axe d'enroulement.

5. Plateau de transfert d'ensemble électrode selon la revendication 1,
dans lequel la portion d'assise (210) est configurée de telle sorte que la première portion de languette (110) reçue dans la première portion de réception (211) et la deuxième portion de languette (120) reçue dans la deuxième portion de réception (212) ne soient pas en contact avec la plaque inférieure (200).

6. Plateau de transfert d'ensemble électrode selon la revendication 1,
dans lequel la portion de support (213) est configurée de telle sorte qu'une surface inférieure formée dans celle-ci ne soit pas en contact avec la portion de corps (130) de l'ensemble électrode (100).

7. Plateau de transfert d'ensemble électrode selon la revendication 6,
dans lequel la portion de support (213) soutient l'ensemble électrode (100) au niveau d'une position plus basse que l'axe d'enroulement de l'ensemble électrode (100).

8. Plateau de transfert d'ensemble électrode selon la revendication 1,
dans lequel la première portion de support (213a) et la deuxième portion de support (213b) sont configurées de telle sorte qu'au moins une portion de celles-ci a le même rayon de courbure que le rayon de courbure de la surface circonférentielle externe de la portion de corps (130).

9. Plateau de transfert d'ensemble électrode selon la revendication 1,
dans lequel la plaque inférieure (200) comprend une pluralité de portions d'assise (210) prévues le long d'au moins une direction parmi une première direction parallèle à l'axe d'enroulement et une deuxième direction perpendiculaire à la première direction, et
dans lequel la pluralité de portions d'assise (210) sont agencées de telle sorte qu'une paire de portions d'assise (210) adjacentes l'une à l'autre le long de la deuxième direction soient espacées d'une distance prédéterminée.

10. Plateau de transfert d'ensemble électrode selon la revendication 9,
dans lequel la première portion de support (213a) et la deuxième portion de support (213b) sont formées de manière discontinue le long de la première direction.

11. Plateau de transfert d'ensemble électrode selon la revendication 10,
dans lequel la première portion de support (213a) et la deuxième portion de support (213b) ont une forme discontinue au niveau d'une position correspondant au noyau de la portion de corps (130) le long de la première direction de sorte à agripper une surface circonférentielle externe de l'ensemble électrode (100) pour le levage de l'ensemble électrode (100).

12. Plateau de transfert d'ensemble électrode selon la revendication 1,
qui comprend une portion de guidage (220) configurée pour empêcher une séparation de l'ensemble électrode (100) durant le transfert le long du bord de la plaque inférieure (200).
